# FASCICULE DE BREVET EUROPEEN

(11) **EP 2 494 747 B1**
(45) Date de publication et mention de la délivrance du brevet: **16.08.2023**
(21) Numéro de dépôt: 10785480.4
(22) Date de dépôt: 20.10.2010
(51) Int. Cl.: H04L 45/00, H04L 45/52, H04L 61/251, H04L 61/2514

(54) **PROCÉDÉS ET DISPOSITIFS DE ROUTAGE DE PAQUETS DE DONNÉES ENTRE RÉSEAUX IPv4 ET IPv6**
VERFAHREN UND VORRICHTUNG ZUM ROUTING VON DATENPAKETEN ZWISCHEN IPV4- UND IPV6-NETZWERKEN
METHODS AND DEVICES FOR ROUTING DATA PACKETS BETWEEN IPv4 AND IPv6 NETWORKS

(30) Priorité: 30.10.2009 FR 0957709
(43) Date de publication de la demande: 05.09.2012
(73) Titulaire: Transpacific IP Group Limited, Grand Cayman KY1-1001 (KY)
(72) Inventeur: KASSI LAHLOU, Mohammed, F-14790 Fontaine Etoupefour (FR); GRIMAULT, Jean-Luc, F-14120 Mondeville (FR)
(74) Mandataire: Eidelsberg, Olivier Nathan
(86) Numéro de dépôt international: PCT/FR2010/052229
(87) Numéro de publication internationale: WO 2011/051594

(56) Documents cités:
- WO-A2-01/69887
- US-A1- 2004 107 287
- US-A1- 2006 146 870
- JAMHOUR E ET AL: "Global mobile IPv6 addressing using transition mechanisms", LOCAL COMPUTER NETWORKS, 2002. PROCEEDINGS. LCN 2002. 27TH ANNUAL IEEE CONFERENCE ON 6-8 NOV.2002, PISCATAWAY, NJ, USA,IEEE, 6 novembre 2002 (2002-11-06), pages 441-450, XP010628198, ISBN: 978-0-7695-1591-5
- KAI WANG ET AL: "DTTS: a transparent and scalable solution for IPv4 to IPv6 transition", COMPUTER COMMUNICATIONS AND NETWORKS, 2001. PROCEEDINGS. TENTH INTERNA TIONAL CONFERENCE ON 15-17 OCT. 2001, PISCATAWAY, NJ, USA,IEEE, 15 October 2001 (2001-10-15), pages 248-253, XP010562102, ISBN: 978-0-7803-7128-6

## Description

Le domaine de l'invention est celui d'un réseau de télécommunications, en particulier un réseau de télécommunications IP dans lequel sont transportés des paquets de données d'un équipement source identifié par une adresse source vers un équipement de destination identifié par une adresse de destination.

Un tel réseau de télécommunications regroupe une pluralité d'équipements, de liens et de fonctions dédiés au transport des données issues d'équipements terminaux reliés à ce réseau. En particulier, les fonctions de transport peuvent être mises en oeuvre grâce à l'activation de protocoles de routage et de transmission. Dans la suite, un réseau de télécommunications administré par un opérateur sera également appelé un domaine.

Les réseaux IP comprennent des dispositifs appelés "routeurs", qui sont chargés d'acheminer les paquets de données vers leur destination sur la base de l'adresse de destination affichée par chaque paquet reçu par le routeur. Pour ce faire, un routeur utilise une "table de routage" contenant des "routes", chaque route étant constituée par un préfixe (commun à plusieurs adresses) ou par une adresse complète (route spécifique). Plus précisément, le routeur détermine comment il doit acheminer le paquet en recherchant la série de bits la plus longue qui est commune à l'adresse de destination et à une route mentionnée dans la table de routage.

Un fournisseur de service de connectivité IP (en anglais, "*Internet Service Provider*", ou ISP) déploie une architecture dédiée pour permettre aux utilisateurs d'équipements terminaux d'être joignables. L'accès au service de connectivité IP est géré par le fournisseur de service qui s'appuie sur le réseau de télécommunications d'un opérateur pour router les paquets de données émis par les équipements terminaux vers leurs destinations finales. Dans certains cas, ledit fournisseur de service est aussi l'opérateur du réseau de télécommunications.

Un tel fournisseur de service ISP affecte une adresse IP, généralement publique, à une passerelle résidentielle placée entre un réseau résidentiel et le réseau public, c'est-à-dire le domaine IP de l'opérateur. La passerelle résidentielle affecte généralement aux terminaux de son réseau résidentiel des adresses IP privées.

Dans la suite, on désignera par "passerelle résidentielle" tout équipement d'interconnexion entre un domaine privé et un domaine opéré par un fournisseur de service, le domaine privé pouvant aussi bien être un réseau résidentiel qu'un réseau d'entreprise. D'autre part, le domaine opéré par un ISP sera aussi désigné par le terme "réseau public".

Placée en coupure des communications entre un terminal de son domaine privé et le domaine IP de l'opérateur, la passerelle résidentielle comporte, de façon connue, une table dans laquelle elle associe l'adresse IP privée de ce terminal dans le domaine privé avec une adresse IP publique de la passerelle dans le domaine public. Souvent, le nombre d'adresses IP publiques utilisables par la passerelle est beaucoup plus petit que le nombre d'adresses IP privées potentiellement utilisables par les terminaux dans le domaine privé. Dans un contexte résidentiel, c'est quasiment toujours une et une seule adresse publique dont dispose la passerelle.

Plus précisément, lorsqu'elle convertit l'en-tête d'un paquet de données sortant du domaine privé (une adresse privée et un port privé sont remplacés par une adresse publique et un port public), la passerelle choisit un port public disponible. Ensuite, pour un paquet entrant destiné à cette adresse publique et ce port public, la passerelle saura comment convertir l'en-tête en une adresse privée et un port privé (avant de retransmettre le paquet au terminal concerné), car elle aura conservé dans une table la correspondance entre le couple adresse privée/port privé et le couple adresse publique/port public. Il y a donc partage de l'usage de l'adresse publique entre les terminaux du domaine privé.

Cette table est connue de l'homme du métier sous l'appellation "table de nattage", cette expression venant de l'acronyme NAT (initiales des mots anglais "*Network Address Translator*" signifiant "Traducteur d'Adresse Réseau"). En fait, pour pouvoir réutiliser un certain nombre d'adresses, on fait le plus souvent appel à un mécanisme dit "NAPT" (initiales des mots anglais "*Network Address and Port Translation*" signifiant "Traduction d'Adresse et de Port Réseau"). On pourra utiliser le terme "NAT" pour "NAPT" par abus de langage par la suite. Par ailleurs, divers types de table de nattage peuvent être utilisées, notamment des tables de type "*Full Cône*", "*Port Restricted*" ou encore "symétrique".

La version classique de ce système d'adresses IP, connu sous le nom de système IPv4, est normalisé notamment sur la base du document RFC 791 de l'IETF ("*Internet Engineering Task Force*").

Or il est communément admis par la communauté des fournisseurs de service IP que l'épuisement des adresses IPv4 publiques est une fatalité.

Pour limiter le nombre d'adresses publiques IPv4 nécessaires pour la fourniture d'un service de connectivité IP à un parc de clients, une solution de double NAT, appelée aussi "NAT Opérateur", a été proposée et réalisée par certains opérateurs. Elle consiste à activer une fonction NAT au sein du réseau de télécommunications de l'opérateur, de telle sorte que les passerelles résidentielles utilisent une adresse privée dans leurs tables de nattage vers l'extérieur (au lieu d'une adresse publique). Ainsi, la fonction "NAT Opérateur" assure un second niveau de traduction des adresses privées des passerelles résidentielles vers des adresses publiques, ce qui permet à un fournisseur de service d'économiser un nombre non négligeable d'adresses publiques IPv4 requises pour la fourniture du service de connectivité IP.

Cette solution "NAT Opérateur" présente toutefois des inconvénients, parmi lesquels on notera :
- une complexification du traitement des paquets de données IP : du fait de l'introduction d'un deuxième niveau de traduction d'adresses et de ports, les paquets de données doivent être modifiés deux fois ;
- la nécessité d'adapter la mise en oeuvre des protocoles de signalisation applicative, ou ALG ("*Application Level Gateway*"), conventionnels tels que DNS ("*Domain Name System*")*,* FTP ("*File Transfer Protocol*") ou encore SIP ("*Session Initiation Protocol*") ; dans le cas de SIP par exemple, l'adresse IP et le port utilisés sont indiqués dans la signalisation SIP, et le message SIP correspondant doit être modifié par l'ALG SIP pour tenir compte du NAT ; si cette fonction reste réalisable au niveau d'une passerelle résidentielle, elle est beaucoup plus difficile à réaliser au niveau d'un NAT opérateur qui fédère de nombreux clients ; en variante, l'adresse et le port publics effectivement en cours d'usage pour le terminal doivent être communiqués à l'application SIP ; et
- une dégradation du service de connectivité IP offert par l'opérateur du réseau public de télécommunications, notamment parce que des fonctionnalités telles que le "*port forwarding*" ou le "*DynDNS*" ne sont pas compatibles aisément avec la fonction "NAT Opérateur".

Le document intitulé "*IPv4 Connectivity Access in the Context of IPv4 Address Exhaustion: Port Range based IP Architecture"* et disponible sur le site http://www.ietf.org/internet-drafts/draft-boucadair-port-range-02.txt enseigne une autre solution pour retarder l'épuisement des adresses IPv4. Cette solution consiste à partager une adresse IPv4 publique entre une pluralité d'équipements clients, les équipements clients étant différenciés entre eux lors du routage des paquets de données ayant pour adresse de destination l'adresse IPv4 partagée, par un numéro de port compris dans une plage de numéros de port contrainte et réservée à chacun des équipements destinataires. Le paquet de données est d'abord routé vers un équipement noeud du réseau apte à router les paquets sur la base de l'adresse de destination et du port. Cet équipement noeud dispose d'une table de correspondance associant au couple formé par l'adresse partagée et la plage de numéros de ports réservée, un identifiant unique de l'équipement destinataire. Cet identifiant unique, par exemple une adresse IP privée, est utilisé pour router le paquet de données jusqu'à l'équipement client destinataire.

Un premier inconvénient de cette solution est qu'elle impose la mémorisation de la correspondance entre l'adresse partagée et l'identifiant d'équipement destinataire dans l'équipement noeud, ce qui crée un passage obligé par cet équipement noeud.

Par ailleurs, l'équipement noeud apte à traiter les paquets de données est généralement l'équipement dédié au traitement de tous les paquets destinés à une adresse partagée. L'équipement noeud dessert tous les équipements clients d'une zone d'adresses publiques. Si l'identifiant unique de l'équipement destinataire est une adresse IP privée ou une session PPP ("*Point-to-Point Protocol*")*,* cela requiert que cet équipement noeud soit situé au niveau d'un réseau d'accès au réseau de télécommunications : en effet, les ISP ne disposent que d'un nombre limité d'adresses privées, et centraliser l'équipement noeud demanderait des mécanismes complexes de réutilisation des adresses privées entre zones (type VPN). Un deuxième inconvénient d'une telle solution, dès lors qu'elle impose la mise en oeuvre d'un grand nombre d'équipements noeuds de ce type dans le réseau de télécommunications (car proche de l'accès), est qu'elle implique un coût important pour un opérateur.

Enfin, un troisième inconvénient de cette solution est qu'elle ne permet pas le routage d'un paquet de données qui ne porterait pas de numéro de port de destination.

De toutes manières, les solutions décrites ci-dessus ne pourront que retarder le phénomène d'épuisement des adresses publiques IPv4, et non l'empêcher.

Pour résoudre ce problème, la communauté s'est mobilisée, ce qui a conduit à la définition d'un nouveau protocole appelé IPv6 ("*Internet Protocol version* 6"). Cette nouvelle version du protocole IP offre un grand nombre d'adresses IPv6 et un mécanisme de routage hiérarchique aux performances améliorées. Ces mêmes fournisseurs ne sont pas indifférents aux alarmes récemment émises par l'IETF ("*Internet Engineering Task Force*"), notamment dans des rapports présentés au sein du groupe de travail GROW ("*Global Routing Operations Working Group*") concernant un risque d'épuisement des adresses IPv4 fin 2010.

Les adresses IPv6 sont longues de 16 octets, soit 128 bits, contre 4 octets (32 bits) pour les adresses IPv4. On dispose ainsi d'un nombre potentiel d'adresses extrêmement grand par rapport au nombre d'adresses IPv4. Une adresse IPv6 comporte deux parties :
- la partie de gauche (le préfixe) identifie un sous-réseau du domaine ; et
- la partie de droite identifie une machine particulière connectée au sous-réseau.

Généralement, les préfixes les plus longs alloués à un sous-réseau sont des préfixes "/64", c'est-à-dire qu'ils comportent 64 bits. Les 64 bits restants (à droite) de l'adresse sont alors utilisés pour identifier une machine particulière appartenant au sous-réseau. Des préfixes de longueurs inférieures (exemple /56 ou même /48) permettent quant à eux d'identifier des sous-réseaux de plus grande ampleur, comportant souvent eux-mêmes des sous-réseaux /64. Néanmoins, dans le standard IPv6, rien n'interdit d'utiliser des préfixes plus longs que /64 et on peut donc envisager, par exemple, un préfixe /116 qui identifie un sous-réseau pouvant comporter 2¹² = 4096 machines (puisque 128 -116 =12).

Le document RFC 3315 décrit un protocole, connu sous le nom de "DHCPv6", permettant notamment aux machines situées dans un sous-réseau d'obtenir une adresse IPv6 auprès d'un serveur dédié, dit "serveur DHCPv6".

Concernant, d'autre part, non plus une simple machine IPv6, mais un routeur ou une passerelle IPv6, un tel équipement doit disposer d'un (ou plusieurs) préfixes IPv6 qui représente(nt) le(s) sous-réseau(x) dont cet équipement route les paquets de données.

Une extension de DHCPv6 permet à un routeur requérant un (ou plusieurs) préfixe(s) IPv6 de le(s) demander auprès d'un équipement pouvant en déléguer (typiquement un routeur en amont). Cette extension est décrite dans le document RFC 3633 (intitulé "*IPv6 Prefix Options for Dynamic Host Configuration Protocol (DHCP) version 6'),* qui spécifie une option *"Identity Association for Prefix Délégation Option*" dans les messages DHCPv6 pour transmettre le (ou les) préfixe(s) délégué(s). Une fois que le routeur requérant s'est vu déléguer un (ou des) préfixe(s) IPv6, il route tous les paquets IPv6 destinés ou issus de machines dont les adresses comprennent le(s) préfixe(s) qu'il gère.

Néanmoins, le protocole IPv6 n'est en pratique pas encore beaucoup utilisé par les opérateurs, pour des raisons financières, stratégiques et techniques liées à la gestion de la complexité des opérations de transition et de migration. Le passage à IPv6 va donc nécessairement engendrer une période de transition pendant laquelle des domaines IPv6 devront s'interconnecter avec des domaines IPv4. Or, rien n'est prévu dans les réseaux actuels pour faciliter une telle interconnexion d'une manière efficace, optimale et sans instanciation d'états supplémentaires dans les noeuds de réseaux intervenant dans la fourniture du service de connectivité IP.

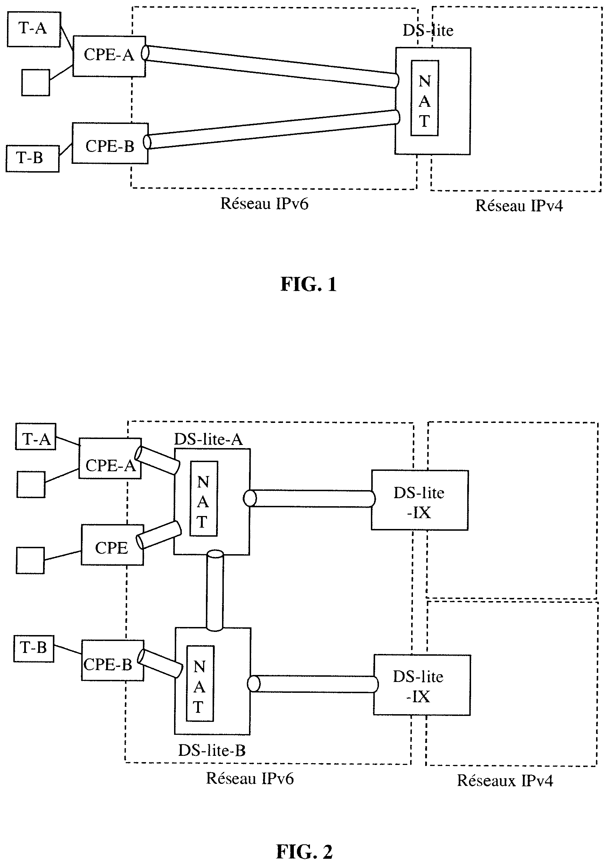

C'est pourquoi une solution, connue sous le nom de "DS-lite", au problème de l'interconnexion IPv4/IPv6 a été proposée dans le document intitulé "*Dual-stack lite broadband deployments post IPv4 exhaustion*" et disponible sur le site http://www.ietf.org/id/draft-ietf-softwire-dual-stack-lite-Q1.txt (on utilise l'expression "*dual stack IP*" pour désigner un système apte à gérer aussi bien les adresses IPv4 que les adresses IPv6). L'architecture DS-lite est représentée sur la **figure 1****.**

Dans cette architecture, des terminaux T tels que T-A, T-B possédant chacun une adresse IPv4 privée sont reliés chacun à une passerelle dite "CPE" (initiales des mots anglais "*Customer Premise Equipment*")*.* Chaque CPE est relié à un noeud appelé "DS-lite" situé à l'interface entre le réseau IPv6 et au moins un réseau IPv4. Les CPE et les DS-lite possèdent des adresses IPv6.

Un terminal T envoie au CPE des paquets IPv4 avec en adresse source son adresse IPv4 privée et en adresse de destination l'adresse IPv4 publique de son correspondant. Un terminal T reçoit du CPE des paquets IPv4 avec en adresse source l'adresse IPv4 publique de son correspondant et en adresse de destination l'adresse IPv4 privée du terminal T.

Lorsqu'un CPE reçoit un paquet IPv4 de la part d'un terminal T de son réseau local, il encapsule ce paquet dans un paquet IPv6 avec en adresse source l'adresse IPv6 du CPE et en adresse de destination l'adresse IPv6 du noeud DS-lite auquel il est raccordé. Ensuite, il route le paquet IPv6 vers le DS-lite. Lorsqu'un CPE reçoit un paquet IPv6 du DS-lite, il en extrait le paquet IPv4 et route ce paquet IPv4 vers l'adresse de destination constituée par l'adresse privée d'un terminal T dans son réseau local.

Lorsqu'un DS-lite reçoit un paquet IPv6 d'un CPE-A contenant un paquet IPv4 de caractéristiques suivantes :
- issu d'un terminal T-A dans le réseau local du CPE-A,
- d'adresse source *AdresPrivT-A,* de port source *PortPrivT-A,* et
- à destination de l'adresse publique *AdresPubB* d'un correspondant B, alors le DS-lite :

- extrait le paquet IPv4 du paquet IPv6,
- change l'adresse source privée *AdresPrivT-A* en mettant à la place une adresse IPv4 publique *AdresPubA* qu'il choisit pour la communication,
- change le port source *PortPrivT-A* en un port source *PortPubA* disponible pour l'adresse *AdresPubA.*
Ces deux dernières opérations constituent la fonction de traduction "NAPT" mentionnée ci-dessus.

Ensuite, le DS-lite route le paquet en fonction de l'adresse destination IPv4 publique *AdresPubB* de la manière suivante.

Si cette adresse *AdresPubB* est du côté réseau IPv4, le paquet est routé directement vers ce réseau IPv4.

Si cette adresse *AdresPubB* appartient au pool d'adresses publiques du noeud DS-lite lui-même, c'est-à-dire que le destinataire B est géré, via un CPE CPE-B, par ce même noeud DS-lite, celui-ci :
- change l'adresse de destination *AdresPubB,* en mettant à la place l'adresse privée *AdresPrivT-B*, et
- change le port de destination *PortPubB* en mettant à la place le port de destination *PortPrivT-B.*
Ces deux dernières opérations constituent elles aussi une fonction NAPT. Ensuite, le DS-lite :
- encapsule le paquet IPv4 dans un paquet IPv6 avec en adresse source l'adresse IPv6 du noeud DS-lite et en adresse de destination l'adresse IPv6 du CPE-B, et
- route le paquet IPv6 vers le CPE-B.

Lorsqu'un DS-lite reçoit un paquet provenant d'un réseau IPv4, les cas suivants peuvent se présenter.
∘ Si l'adresse de destination appartient au pool d'adresses publiques du noeud DS-lite, cela signifie que le destinataire du paquet est un terminal T-A d'un client A traité par le noeud DS-lite ; alors le noeud DS-lite :
   - change l'adresse de destination *AdresPubA* en mettant à la place l'adresse privée *AdresPrivT-A*,
   - change le port de destination *PortPubA* en *PortPrivT-A* (fonction NAPT),
   - encapsule le paquet IPv4 dans un paquet IPv6 avec en adresse source l'adresse IPv6 du noeud DS-lite et en adresse de destination l'adresse IPv6 du CPE-A, et
   - route le paquet IPv6 vers le CPE-A.
o Sinon le paquet est rejeté ou routé directement en IPv4.

Cette solution "DS-lite" présente l'inconvénient de requérir de fréquentes applications de la fonction NAPT ; en effet, ces applications sont complexes.

Une variante de la solution DS-lite, connue sous le nom de "DS-lite-interco", a été proposée dans le document intitulé "*Deploying Dual-Stack lite in IPv6-only Network*" et disponible sur le site http://www.ietf. org/id/draft-boucadair-dslite-interco-v4v6-02.txt. Cette solution modifie la solution "DS-lite" décrite succinctement ci-dessus en séparant les fonctions NAPT des fonctions d'interconnexion IPv4/IPv6, ce qui permet de transmettre du trafic IPv4 encapsulé dans IPv6 directement entre des nœuds "DS-lite".

L'architecture "DS-lite-interco" est représentée sur la **figure 2**. Cette architecture comprend des noeuds DS-lite situés dans un réseau IPv6 et réalisant la fonction NAT ou NAPT de changement d'adresse IPv4 et, le cas échéant, de port. De plus, chaque noeud DS-lite peut router des paquets IPv6 vers un noeud "DS-lite-IX" situé à l'interface entre le réseau IPv6 et au moins un réseau IPv4, et réalisant uniquement la fonction d'interconnexion IPv4/IPv6.

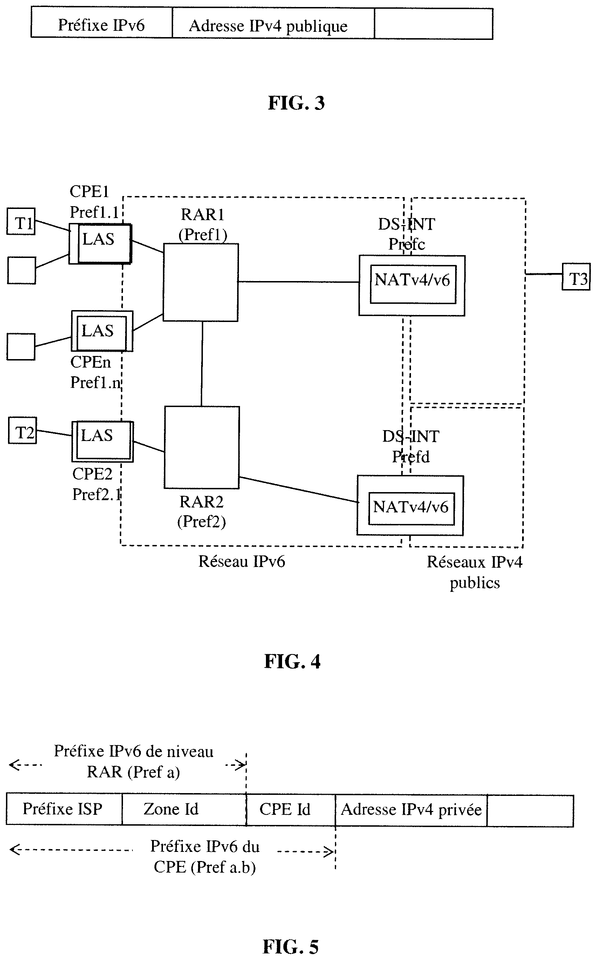

Par ailleurs, la solution "DS-lite-interco" utilise des adresses IPv6 construites en combinant un préfixe IPv6 avec une adresse IPv4 publique : dans la suite, on désignera une adresse ainsi constituée par l'expression "adresse IPv6/IPv4 publique". Cette combinaison peut, comme représenté sur la **figure 3**, être une simple concaténation. Le préfixe IPv6 peut être un préfixe unique (appelé ci-dessous "PrefU") tel qu'un préfixe défini par l'administration IANA ("*Internet Assigned Numbers Authority*"), ou un préfixe spécifique à un réseau IPv6 donné (caractérisant un ISP, par exemple).

Le fonctionnement des terminaux et des CPE reste inchangé par rapport au fonctionnement, décrit succinctement ci-dessus, de l'architecture DS-lite. En revanche, les noeuds DS-lite et DS-lite-IX échangent entre eux des informations de routage concernant les adresses IPv4 qui leur appartiennent ou pour lesquelles ils détiennent des adresses IPv6/IPv4 publiques.

Lorsqu'un DS-lite reçoit de la part d'un CPE-A un paquet IPv4 encapsulé dans un paquet IPv6, il en extrait le paquet IPv4, traduit l'adresse source et le port IPv4 privés en une adresse et un port IPv4 publics (fonction NAPT), maintient la correspondance entre les adresses et ports IPv4 privés, publics, et IPv6 (*AdresPrivT-A, PortPrivT-A, AdresPubA, PortPubA,* adresse IPv6 du CPE A), exactement comme dans le procédé DS-lite.

Le DS-lite route ensuite le paquet en fonction d'une adresse de destination IPv4 publique *AdresPubB* de la manière suivante.
∘ Si le DS-lite possède une route IPv6/IPv4 publique (PrefU | *AdresPubB)* pour cette adresse *AdresPubB,* il encapsule le paquet IPv4 dans un paquet IPv6 avec en adresse source l'adresse IPv6/IPv4 publique (PerfU | adresse IPv4 source *AdresPubA*) et en adresse de destination l'adresse IPv6/IPv4 publique (PerfU | adresse IPv4 de destination *AdresPubB*), et route le paquet vers le DS-lite ou DS-lite-IX concerné.
∘ Si cette adresse *AdresPubB* appartient au pool d'adresses publiques du noeud DS-lite, le fonctionnement est le même que dans le procédé DS-lite : le nœud DS-lite traduit l'adresse *AdresPubB* en l'adresse IPv4 et le port privés correspondants (fonction NAPT), encapsule le paquet IPv4 dans un paquet IPv6 avec en adresse source l'adresse IPv6 du DS-lite et en adresse de destination l'adresse IPv6 du CPE-B correspondant. Ensuite, il route le paquet vers le CPE-B concerné.
o Sinon le paquet est rejeté.

Lorsqu'un DS-lite reçoit un paquet IPv6 d'un autre DS-lite ou d'un DS-lite-IX, il le route en fonction de l'adresse destination IPv4 publique *AdresPub* de la manière suivante.
∘ Si cette adresse appartient au pool d'adresses publiques du noeud DS-lite, le fonctionnement est le même que dans le procédé DS-lite : le noeud DS-lite extrait le paquet IPv4, traduit cette adresse en l'adresse IPv4 et le port privés correspondants (fonction NAPT), encapsule le paquet IPv4 dans un paquet IPv6 avec en adresse source l'adresse IPv6 du DS-lite et en adresse de destination l'adresse IPv6 du CPE correspondant. Ensuite, il route le paquet IPv6 vers le CPE concerné.
∘ Si cette adresse correspond à une adresse IPv6 d'un autre DS-lite ou d'un DS-lite-IX, le paquet IPv6 est routé directement vers le DS-lite ou le DS-lite-IX concerné.
∘ Sinon le paquet est rejeté.

Lorsqu'un DS-lite-IX reçoit un paquet IPv6 d'un DS-lite ou d'un autre DS-lite-IX, il le route en fonction de l'adresse destination IPv4 publique de la manière suivante.
∘ Si cette adresse est du côté réseau IPv4, le DS-lite-IX extrait le paquet IPv4 et le route directement vers le réseau IPv4.
∘ Si cette adresse correspond à une adresse IPv6 d'un DS-lite ou d'un autre DS-lite-IX, le paquet IPv6 est routé directement vers le DS-lite ou le DS-lite-IX concerné.
∘ Sinon le paquet est rejeté.

Lorsqu'un DS-lite-IX reçoit un paquet du réseau IPv4, il le route en fonction de l'adresse destination IPv4 publique de la manière suivante.
∘ Si cette adresse correspond à une adresse IPv6 d'un DS-lite ou d'un autre DS-lite-IX, le paquet IPv4 est encapsulé dans un paquet IPv6 avec en adresse source l'adresse IPv6/IPv4 publique (PrefU | adresse publique IPv4 source) et en adresse de destination l'adresse IPv6/IPv4 publique (PrefU | adresse publique IPv4 de destination), puis ce paquet IPv6 est routé vers le DS-lite ou le DS-lite-IX concerné.
∘ Sinon le paquet est rejeté ou routé directement en IPv4.

Ainsi, la solution "DS-lite-interco" simplifie l'acheminement des paquets par rapport à la solution "DS-lite", mais les applications de la fonction NAT/NAPT dans le réseau sont tout aussi fréquentes, en particulier dans le cas où un terminal T-A situé dans le réseau privé associé à une passerelle CPE-A (elle-même reliée à un DS-lite-A) communique avec un terminal T-B situé dans le réseau privé associé à une passerelle CPE-B (elle-même reliée à un DS-lite-B), car dans ce cas les deux dispositifs DS-lite mettent en oeuvre une coûteuse application de la fonction NAT/NAPT.

On connaît, sur la base de la demande US 2006/0146870 A1 un procédé de routage d'un paquet de données IPv4 émis par un terminal source appartenant à un premier domaine IPv4 à destination, *via* un domaine IPv6, d'un terminal destinataire appartenant à un second domaine IPv4, ledit second domaine IPv4 étant privé, ledit procédé comprenant, sur réception dudit paquet de données IPv4 de la part dudit terminal source, les étapes suivantes :
- construction d'une adresse de destination IPv6 par combinaison d'un préfixe IPv6 et de l'adresse IPv4 privée dudit terminal destinataire dans le second domaine IPv4,
- obtention d'un paquet de données IPv6 portant ladite adresse de destination IPv6, et
- routage dudit paquet de données IPv6 dans ledit domaine IPv6. Ledit paquet de données IPv6 est obtenu, dans ce procédé également, par une coûteuse application de la fonction NAT/NAPT.

De US 2004/0107287 A1, on connaît un procédé de routage d'un paquet de données IPv4 émis par un terminal source appartenant à un premier domaine IPv4 à destination, via un domaine IPv6, d'un terminal destinataire appartenant à un second domaine IPv4, ledit second domaine IPv4 étant privé, ledit procédé comprenant, sur réception dudit paquet de données IPv4 de la part dudit terminal source, les étapes suivantes : construction d'une adresse de destination IPv6 par combinaison d'un préfixe IPv6 et de l'adresse IPv4 privée dudit terminal destinataire (T2) dans le second domaine IPv4, obtention d'un paquet de données IPv6 portant ladite adresse de destination IPv6, et routage dudit paquet de données IPv6 dans ledit domaine IPv6.

De l'article: "DTTS: a transparent and scalable solution for IPv4 to IPv6 transition" par KAI WANG ET AL, on connaît la solution DTTS (Dynamic Tunneling Transition Solution), qui est présentée pour la transition IPv4 vers IPv6 basée sur la technique de tunnel dynamique et l'approche à double pile. La technique de tunnellisation dynamique est utilisée pour encapsuler un paquet IPv4 dans un paquet IPv6 afin d'obtenir une transition transparente et évolutive. Cette technique, associée à l'approche à double pile, permet aux applications IPv4 de s'exécuter et d'interagir avec d'autres applications IPv4 dans les environnements réseau IPv4 et IPv6 sans aucune modification ni recompilation, et sans NAT, ni aucun proxy ou passerelle d'application.

La présente invention concerne donc un procédé de routage d'un paquet de données IPv4 émis par un terminal source appartenant à un premier domaine IPv4 à destination, via un domaine IPv6, d'un terminal destinataire appartenant à un second domaine IPv4, ledit second domaine IPv4 étant privé, ledit procédé comprenant, sur réception dudit paquet de données IPv4 de la part dudit terminal source, les étapes suivantes :
- construction d'une adresse de destination IPv6,
- encapsulation du paquet de données IPv4, après substitution éventuelle de son adresse de destination IPv4, dans un paquet de données IPv6 portant ladite adresse de destination IPv6, et
- routage dudit paquet de données IPv6 dans ledit domaine IPv6.
Ledit procédé est remarquable en ce que l'adresse de destination IPv6 est construite par combinaison d'un préfixe IPv6 et de l'adresse IPv4 privée dudit terminal destinataire dans le second domaine IPv4.

Corrélativement, la présente invention concerne un procédé de routage d'un paquet de données IPv6 résultant de l'émission par un terminal source appartenant à un premier domaine IPv4, ledit premier domaine IPv4 étant privé, d'un paquet IPv4 à destination, via un domaine IPv6, d'un terminal destinataire appartenant à un second domaine IPv4, ledit procédé comprenant, sur réception dudit paquet de données IPv6, les étapes suivantes :
- extraction d'un paquet de données IPv4 à partir dudit paquet de données IPv6, et
- routage dans le second domaine IPv4 dudit paquet de données IPv4 extrait, après substitution éventuelle de son adresse source IPv4.
Ledit procédé est remarquable en ce que l'adresse IPv6 source du paquet de données IPv6 est construite par combinaison d'un préfixe IPv6 et de l'adresse IPv4 privée dudit terminal source dans le premier domaine IPv4.

Naturellement, ledit domaine IPv4 privé peut être d'un type quelconque, tel qu'un réseau résidentiel ou un réseau d'entreprise. Par ailleurs, le mot "terminal" est utilisé pour désigner uniformément tout type de dispositif informatique, par exemple un ordinateur personnel ou un serveur.

Grâce à l'invention, on peut économiser l'usage d'adresses IPv4 publiques, tout en effectuant significativement moins d'opérations complexes que dans l'art antérieur.

En effet, selon l'art antérieur, un terminal appartenant à un réseau IPv4 privé est identifiable par le couple constitué par son adresse IPv4 privée, et par l'adresse IPv4 publique de la passerelle qui permet à ce terminal d'accéder à un réseau IPv4 ou IPv6. Comme décrit ci-dessus, cette adresse IPv4 publique peut, par exemple, être une adresse partagée par une pluralité de passerelles (en affectant une plage de ports différente à chacune de ces passerelles), ou une adresse IPv4 publique qui a été (en même temps qu'un port) dynamiquement et temporairement affectée à la passerelle en appliquant la fonction NAPT dans un DS-lite.

Or les auteurs de l'invention ont pensé que, dans le cas où cette passerelle est connectée à un réseau IPv6, et donc possède une adresse IPv6, on pourrait peut-être envisager d'identifier un tel terminal par le couple constitué par son adresse IPv4 privée et par le préfixe IPv6 de la passerelle, de manière à éviter (au moins dans certains cas) de devoir attribuer à la passerelle une adresse IPv4 publique (permanente ou temporaire). C'est pourquoi l'invention propose d'utiliser des adresses IPv6 construites en combinant un préfixe IPv6 avec une adresse IPv4 privée : dans la suite, on désignera une adresse ainsi constituée par l'expression "adresse IPv6/IPv4 privée".

Le problème que pose toutefois une telle disposition est de respecter en même temps les normes en vigueur concernant les adresses IPv4 privées de tels terminaux. Notamment, comme ces adresses sont attribuées localement par chaque passerelle, il arrive que deux terminaux appartenant à des réseaux IPv4 privés distincts possèdent la même adresse IPv4 privée. Les auteurs de la présente invention se sont rendu compte que, si ces adresses privées ne sont plus accouplées à l'adresse IPv4 publique de leur passerelle respective, il existe, au niveau d'un réseau IPv4 privé, un risque de conflit d'adresse dans les cas où l'adresse IPv4 privée d'un correspondant distant pour une communication envisagée est déjà utilisée par la passerelle, soit pour un autre correspondant distant dans une communication en cours, soit pour un autre terminal relié à cette même passerelle. C'est pourquoi l'invention prévoit, pour les passerelles situées entre un domaine IPv6 et un domaine IPv4 privé, un mécanisme de substitution locale d'adresses IPv4, qui sera décrit en détail ci-dessous.

Un avantage supplémentaire de l'invention se situe au niveau de la fréquence d'application de la fonction NAT/NAPT. En effet, dans les procédés selon l'art antérieur tels que le procédé DS-lite ou DS-lite-interco, les communications entre deux passerelles placées en coupure entre un réseau IPv4 privé et un réseau IPv6 acheminent les paquets de données au travers d'un dispositif "DS-lite", ce qui requiert à chaque fois l'application d'une fonction NAT/NAPT en entrée et/ou en sortie du DS-lite. Or l'invention permet de se passer complètement de ces coûteuses applications dans le cas des paquets de données n'ayant à traverser, en allant d'une passerelle à l'autre, que des réseaux de type IPv6 (l'application d'une fonction NAT/NAPT restant nécessaire pour les paquets de données transitant d'un réseau IPv4 public à un réseau IPv6, ou inversement, cette fonction étant alors mise en oeuvre par un dispositif d'interface approprié).

Corrélativement, l'invention concerne divers dispositifs de routage de paquets de données.

Elle concerne ainsi, premièrement, un dispositif de routage d'un paquet de données IPv4 émis par un terminal source appartenant à un premier domaine IPv4 à destination, via un domaine IPv6, d'un terminal destinataire appartenant à un second domaine IPv4, ledit second domaine IPv4 étant privé, ledit dispositif comprenant, sur réception dudit paquet de données IPv4 de la part dudit terminal source, les moyens pour :
- construire une adresse de destination IPv6,
- encapsuler le paquet de données IPv4, après substitution éventuelle de son adresse de destination IPv4, dans un paquet de données IPv6 portant ladite adresse de destination IPv6, et
- router ledit paquet de données IPv6 dans ledit domaine IPv6.
Ledit dispositif de routage est remarquable en ce que l'adresse de destination IPv6 est construite par combinaison d'un préfixe IPv6 et de l'adresse IPv4 privée dudit terminal destinataire dans le second domaine IPv4.

Selon des caractéristiques particulières, ledit dispositif de routage est constitué par un dispositif d'interface situé entre ledit domaine IPv6 et ledit premier domaine IPv4, ce dernier étant public, ledit dispositif d'interface étant apte à effectuer ladite substitution de l'adresse de destination du paquet de données IPv4 en remplaçant une adresse IPv4 publique par une adresse IPv4 privée.

Selon d'autres caractéristiques particulières, ledit dispositif de routage est constitué par une passerelle située entre ledit domaine IPv6 et ledit premier domaine IPv4, ce dernier étant privé, ladite passerelle étant apte à effectuer ladite substitution de l'adresse de destination du paquet de données IPv4 lorsqu'il y a eu conflit d'adresse IPv4.

De préférence, ladite passerelle est également apte à relayer une requête DNS qui lui est envoyée par un terminal relié à cette passerelle, et, après réception d'une réponse DNS, à envoyer à ce terminal l'adresse IPv4 contenue dans ladite réponse DNS ou, en cas de conflit d'adresse IPv4, une adresse IPv4 privée de substitution.

Grâce à ces dispositions, un terminal situé dans un réseau IPv4 privé peut, lorsqu'il veut communiquer avec un correspondant dont il ne connaît qu'une adresse générique (par exemple user@domain.fr), déterminer quelle est l'adresse IPv4 (publique ou privée) de ce correspondant, de façon à insérer cette adresse comme adresse de destination dans les paquets de données que ce terminal va envoyer à son correspondant.

Selon ce mode de réalisation préférentiel, la passerelle est donc apte, suite à la réception d'une requête DNS de la part du terminal, à :
- interroger un serveur DNS pour obtenir les adresses IPv4 et, le cas échéant, IPv6 du correspondant,
- extraire de la réponse DNS l'adresse IPv4 du correspondant,
- mettre en oeuvre, en cas de conflit d'adresse, le mécanisme de substitution mentionné ci-dessus,
- transmettre au terminal soit l'adresse IPv4 reçue de la part du serveur DNS soit l'adresse de substitution,
- recevoir de la part du terminal des paquets de données à destination du correspondant, et, le cas échéant, y remplacer, dans l'adresse de destination, l'adresse IPv4 de substitution par l'adresse IPv4 reçue de la part du serveur DNS, et
- encapsuler le paquet de données IPv4 dans un paquet IPv6 avant d'émettre ce dernier sur le réseau IPv6.

On notera que l'étape de transmission au terminal d'une adresse IPv4 par la passerelle pourra être omise si le terminal la connaît déjà, suite à une requête DNS précédente.

L'invention concerne aussi, deuxièmement, un dispositif de routage d'un paquet de données IPv6 résultant de l'émission par un terminal source appartenant à un premier domaine IPv4, ledit premier domaine IPv4 étant privé, d'un paquet IPv4 à destination, via un domaine IPv6, d'un terminal destinataire appartenant à un second domaine IPv4, ledit dispositif comprenant, sur réception dudit paquet de données IPv6, les moyens pour :
- extraire un paquet de données IPv4 à partir dudit paquet de données IPv6, et
- router dans le second domaine IPv4 ledit paquet de données IPv4 extrait, après substitution éventuelle de son adresse source IPv4.
Ledit dispositif de routage est remarquable en ce que l'adresse IPv6 source du paquet de données IPv6 est construite par combinaison d'un préfixe IPv6 et de l'adresse IPv4 privée dudit terminal source dans le premier domaine IPv4.

Selon des caractéristiques particulières, ledit dispositif de routage est constitué par un dispositif d'interface situé entre ledit domaine IPv6 et ledit second domaine IPv4, ce dernier étant public, ledit dispositif d'interface étant apte à effectuer ladite substitution de l'adresse source du paquet de données IPv4 en remplaçant une adresse IPv4 privée par une adresse IPv4 publique.

Selon d'autres caractéristiques particulières, ledit dispositif de routage est constitué par une passerelle située entre ledit domaine IPv6 et ledit second domaine IPv4, ce dernier étant privé, ladite passerelle étant apte à effectuer ladite substitution de l'adresse source du paquet de données IPv4 en cas de conflit d'adresse IPv4.

L'invention concerne également un système de routage de paquets de données. Ce système de routage de paquets de données est remarquable en ce qu'il comprend une passerelle, telle que décrite succinctement ci-dessus, reliée à un dispositif d'interface, tel que décrit succinctement ci-dessus, par l'entremise d'un routeur d'accès réseau situé dans ledit domaine IPv6, et en ce que ledit routeur d'accès réseau est apte à déterminer l'adresse IPv6 correspondant à une adresse IPv4 publique donnée.

Grâce à ces dispositions, le système de routage peut déterminer à quel dispositif d'interface doivent être envoyés des paquets de données destinés à transiter par un réseau IPv4 public, même dans le cas où la réponse DNS envoyée à la passerelle, comme décrit succinctement ci-dessus, ne contient pas d'adresse IPv6 associée au correspondant (auquel cas, la réponse DNS contient normalement une adresse IPv4 publique).

Ainsi, dans ce mode de réalisation, le routeur d'accès pourra router correctement ces paquets de données, et la passerelle pourra obtenir de la part de ce routeur d'accès ladite adresse IPv6 si la passerelle en fait la demande (lorsque la passerelle a ultérieurement besoin de cette adresse IPv6 pour router des paquets de données sortants).

Selon des caractéristiques particulières, on pourra réaliser l'un quelconque des dispositifs de routage de paquets de données succinctement exposés ci-dessus dans le contexte d'un circuit électronique. Ce circuit électronique pourra, par exemple, être constitué par une puce à logique câblée.

Les avantages offerts par ces dispositifs et ce système de routage de paquets sont essentiellement les mêmes que ceux offerts par les procédés corrélatifs succinctement exposés ci-dessus.

L'invention vise, enfin, un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour la mise en oeuvre des moyens compris dans l'un quelconque des dispositifs de routage de paquets de données succinctement exposés ci-dessus, lorsqu'il est exécuté sur un ordinateur.

Les avantages offerts par ce programme d'ordinateur sont essentiellement les mêmes que ceux offerts par lesdits dispositifs.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :
- la figure 1 est un schéma synoptique illustrant un système de routage de paquets de données, connu sous le nom de "DS-lite", selon l'art antérieur,
- la figure 2 est un schéma synoptique illustrant un autre système de routage de paquets de données, connu sous le nom de "DS-lite-interco", selon l'art antérieur,
- la figure 3 représente schématiquement un format d'adresse IPv6 utilisé dans le système "DS-lite-interco",
- la figure 4 est un schéma synoptique illustrant un système de routage de paquets de données selon un mode de réalisation de la présente invention, et
- la figure 5 représente schématiquement un format d'adresse IPv6 selon un mode de réalisation de l'invention,
- la figure 6 représente schématiquement, selon un mode de réalisation de l'invention, un préfixe caractérisant un dispositif d'interface entre un réseau IPv6 et un réseau IPv4 public, et
- les figures 7a et 7b représentent un exemple de table de correspondance et de liste d'adresses en cours d'utilisation, selon un mode de réalisation de l'invention.

La **figure 4** représente un système de routage de paquets de données selon un mode de réalisation de la présente invention. Sur cette figure, des terminaux T1, T2 appartenant à des réseaux IPv4 privés sont reliés chacun à une passerelle CPE possédant un préfixe IPv6 qui lui est propre.

Chaque CPE est relié, dans le réseau IPv6, à un routeur d'accès réseau (RAR). Les préfixes des CPE raccordés à un même RAR sont pris sous un préfixe commun appelé "préfixe de niveau routeur d'accès réseau" : il s'agit là d'un principe de routage IPv6 classique, dans lequel les préfixes les plus courts affectés aux "troncs" (ici les RARs) englobent des préfixes plus longs affectés aux "feuilles" (ici les CPE) ; par exemple, si le RAR annonce qu'il peut router un préfixe de 43 bits (c'est le "préfixe de niveau routeur d'accès réseau"), cela lui permet potentiellement de servir 8192 CPEs si chaque CPE est affecté d'un préfixe de 56 bits (en effet: 56 - 43 = 13, et 2¹³ = 8192).

Les routeurs du réseau IPv6, tels que RAR1 et RAR2 sur la figure 4, sont aptes, de manière classique, à échanger entre eux des informations de routage.

Enfin, au moins un dispositif d'interface DS-INT est situé à l'interface entre le réseau IPv6 et un réseau IPv4 public (derrière lequel peuvent se trouver d'autres réseaux, tels qu'un réseau IPv6 ou un réseau IPv4 privé). Un terminal T3 est identifiable par son adresse IPv4 publique dans ce réseau IPv4 public (même s'il possède également une adresse IPv4 privée).

La passerelle CPE, le dispositif d'interface DS-INT et le routeur d'accès réseau RAR sont aptes à effectuer l'encapsulation/extraction des paquets IPv4 sous IPv6.

Comme mentionné ci-dessus, selon l'invention, les terminaux appartenant à un réseau IPv4 privé possèdent une adresse IPv6, dite "adresse IPv6/IPv4 privée", constituée en combinant un préfixe IPv6 avec une adresse IPv4 privée.

Selon un mode de réalisation illustré sur la **figure 5**, l'adresse IPv6/IPv4 privée est constituée (de gauche à droite) en concaténant le préfixe IPv6 du CPE avec cette adresse IPv4 privée ; le préfixe IPv6 du CPE est ici quant à lui constitué en concaténant le préfixe IPv6 du RAR desservant le CPE avec un certain nombre de bits caractérisant le CPE ; enfin, le préfixe IPv6 du RAR est constitué en concaténant le préfixe de l'ISP avec un certain nombre de bits caractérisant le RAR.

Les principales fonctions de ce système sont les suivantes.

### Fonction Relais DNS

Cette fonction est intégrée dans les CPE. Lorsqu'un terminal T tel que T1 ou T2 envoie au CPE auquel il est relié une requête de type DNS (initiales des mots anglais "*Domain Name System*" signifiant Système de Noms de Domaine), ce CPE relaie la requête. Après réception d'une réponse DNS, le CPE met en oeuvre les opérations suivantes.

Si ladite réponse DNS contient une adresse IPv6/IPv4 privée, le CPE maintient dans une table la correspondance entre l'adresse IPv4 privée et l'adresse IPv6, puis transmet au terminal T la partie adresse IPv4 privée de la réponse DNS, après, le cas échéant, résolution d'un conflit d'adresses comme expliqué ci-dessous au sujet de la fonction LAS.

Si la réponse DNS est une adresse IPv4 publique, le CPE transmet cette adresse IPv4 publique au terminal T. Dans ce cas, il sera nécessaire d'utiliser d'autres techniques pour découvrir le préfixe IPv6 du dispositif d'interface DS-INT concerné, telles que la "méthode du premier paquet" expliquée ci-dessous ou l'utilisation d'un serveur spécialisé. Après découverte de ce préfixe IPv6, les paquets de données envoyés à ce dispositif d'interface DS-INT utiliseront une adresse IPv6/IPv4 publique, par exemple sous le format représenté à la figure 3.

### Fonction LAS

Cette fonction LAS (initiales des mots anglais "*Local Address Substitution*" signifiant "Substitution Locale d'Adresses") est elle aussi assurée par les CPE. Elle permet à un CPE de résoudre le conflit d'adresses dans le cas où une adresse IPv4 privée distante est déjà utilisée au niveau du CPE :
∘ pour un correspondant distant dans une communication en cours (que cette adresse soit originelle ou de substitution), ou
∘ pour un terminal situé dans le réseau privé local associé à ce CPE (on notera qu'il ne peut y avoir de conflit d'adresse impliquant des adresses IPv4 *publiques*, puisque celles-ci sont uniques).

Si c'est le cas, cette adresse est substituée localement. Plus précisément, il y aura substitution dans les situations suivantes.
∘ Lorsqu'un CPE reçoit une réponse DNS indiquant une adresse IPv6/IPv4 privée à utiliser pour une communication, le CPE vérifie que l'adresse IPv4 contenue dans cette adresse IPv6/IPv4 privée n'est pas déjà utilisée par un autre correspondant distant dans une communication en cours ou par un terminal local. Si c'est le cas, il substitue cette adresse IPv4 par une autre adresse IPv4 non déjà utilisée au niveau de ce CPE, et maintient dans une table la correspondance entre l'adresse IPv4 de substitution et l'adresse IPv6/IPv4 privée. Le CPE transmet, en réponse au terminal qui a envoyé la requête DNS, l'adresse IPv4 de substitution.
∘ Lorsqu'un CPE reçoit un paquet IPv6 avec une nouvelle adresse IPv6/IPv4 privée source, il vérifie que l'adresse IPv4 contenue dans cette adresse IPv6/IPv4 privée source n'est pas déjà utilisée par un autre correspondant distant dans une communication en cours ou par un terminal local. Si c'est le cas, il substitue cette adresse IPv4 par une autre adresse IPv4 non déjà utilisée au niveau de ce CPE, et maintient dans une table la correspondance entre l'adresse IPv4 de substitution et l'adresse IPv6/IPv4 privée source.

Il importe de noter que les substitutions d'adresse IPv4 sont locales (c'est-à-dire ne sont connues que du CPE qui les met en oeuvre). Dans les cas où il y a substitution, le CPE procédera aux remplacements suivants :
∘ les adresses IPv4 source des paquets entrants sont remplacées par les adresses de substitution, et
∘ les adresses IPv4 de destination des paquets sortants sont remplacées par les adresses avant substitution.

Si l'allocation d'adresses aux terminaux T1, T2 d'un réseau privé IPv4 est faite par le CPE de ce réseau privé, le CPE doit choisir les valeurs des adresses IPv4 privées de manière pseudo-aléatoire, et vérifier qu'elles ne sont pas déjà utilisées soit en tant qu'adresse source soit en tant qu'adresse de destination dans les communications en cours.

On peut ainsi pallier les situations de conflit d'adresses, même lorsqu'une adresse est configurée manuellement dans un terminal.

### Fonction NATv4/v6

Cette fonction est nécessaire uniquement pour une communication avec l'Internet IPv4 ou avec tout autre réseau ne faisant pas partie du domaine IPv6. Elle est assurée par les dispositifs d'interface DS-INT. Chaque DS-INT effectue la traduction (fonction NAT) entre adresses IPv4 publiques et privées ; le cas échéant (c'est-à-dire en fonction de la mise en oeuvre choisie par les opérateurs réseau), chaque DS-INT effectue également, au besoin, la traduction (fonction NAPT) entre ports publics et privés. Une correspondance entre, d'une part, les adresses et ports IPv4 privés et publics, et d'autre part les adresses IPv6 permet le transit des paquets de données entre le réseau IPv6 et les réseaux IPv4.

### Fonction de Résolution de Préfixe

La résolution de préfixe IPV6 est nécessaire lorsque le DNS a retourné au CPE une adresse IPv4 publique comme adresse du correspondant distant.

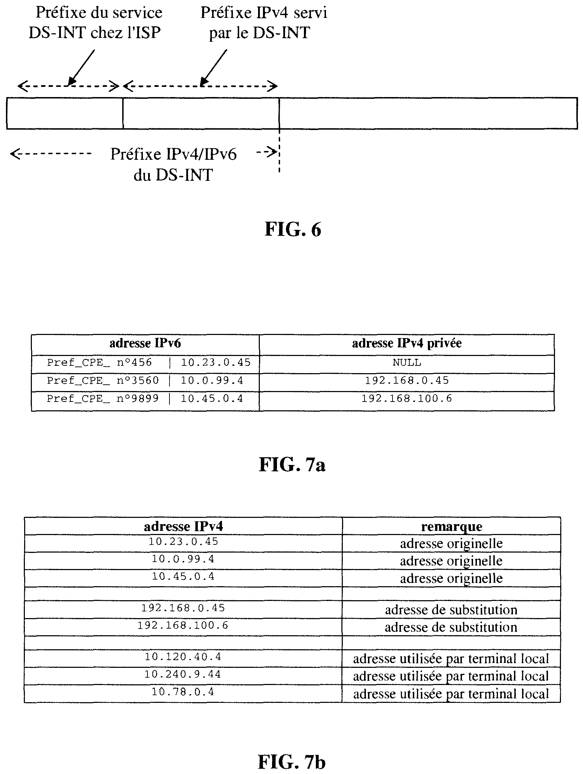

Selon un mode de réalisation, illustré sur la **figure** 6, on attribue aux dispositifs d'interface DS-INT des préfixes IPv6/IPv4 construits de la manière suivante : le préfixe du DS-INT est constitué par un préfixe ISP correspondant au "service DS-INT" chez l'ISP suivi d'un préfixe IPv4 utilisé par le DS-INT pour le routage de paquets de données vers un réseau IPv4 (par exemple l'Internet). Un CPE qui envoie des paquets destinés à un réseau IPv4 interconnecté par un DS-INT n'a plus alors qu'à concaténer le préfixe "service DS-INT" de l'ISP avec l'adresse IPv4 publique du correspondant distant pour obtenir l'adresse de destination IPv6 vers laquelle il enverra les paquets encapsulés.

Si le réseau IPv6 n'est pas apte à router les paquets de données sur la base de telles adresses IPv6/IPv4 publiques incorporant un préfixe IPv6/IPv4 de DS-INT, le routage pourra, selon un autre mode de réalisation dit "du premier paquet", être réalisé de la manière suivante : pour déterminer le préfixe du DS-INT correspondant à une adresse IPv4 publique, un routeur commencera par chercher dans une liste de routage contenant des adresses IPv6/IPv4 publiques, celle qui a dans sa partie IPv4 le plus long préfixe IPv4 correspondant à l'adresse destination IPv4 publique. Une fois cette adresse trouvée, la fonction extrait le préfixe IPv6 et construit l'adresse IPv6 de destination en concaténant le préfixe IPv6 trouvé et l'adresse de destination IPv4 publique. Dans ce mode de réalisation, il importe que la position des bits de l'adresse IPv4 publique dans l'adresse IPv6 soit connue des routeurs.

Enfin, selon encore un autre mode de réalisation, décrit ci-dessous, le routeur par défaut du CPE connaît le préfixe IPv6 du DS-INT pouvant router l'adresse IPv4 publique.

Dans tous les cas, une fois que le premier paquet IPv6 en retour parvient au CPE, ce dernier connaît l'adresse IPv6 du DS-INT.

### Fonctionnement du système

Pour fixer les idées, on choisira ici un format d'adresse IPv6/IPv4 privée dans lequel le préfixe IPv6 est simplement concaténé avec l'adresse IPv4 privée.

On va décrire maintenant, en premier lieu, les étapes d'une communication entre deux terminaux tels que les terminaux T1 et T2 de la figure 4.

Lorsqu'un terminal T1 d'adresse IPv4 privée "adresselPv4-1" initie une communication avec un terminal T2 d'adresse IPv4 privée "adresseIPv4-2", il commence par résoudre l'adresse du terminal T2, sauf éventuellement s'il l'a déjà fait pour les besoins d'une communication préalable. Cette résolution DNS est relayée par le CPE1 qui reçoit en réponse DNS l'adresse IPv6 de T2, à savoir : adresselPv6-2 = Pref2.1 | adresseIPv4-2.

Le CPE1 vérifie alors que l'adresse adresselPv4-2 n'est pas déjà utilisée par un autre correspondant distant dans une communication en cours ou par un terminal dans son réseau local. Pour ce faire, il consulte une liste des adresses IPv4 en cours d'utilisation. Cette liste est constituée des adresses IPv4 suivantes : adresses des terminaux locaux, adresses non substituées correspondant aux adresses IPv6 des correspondants distants, et adresses de substitution correspondant aux adresses IPv6 des correspondants distants.
∘ Si l'adresse adresselPv4-2 est déjà utilisée, CPE1 la remplace par une autre valeur adresseIPv4-2*, maintient dans sa table la correspondance entre les adresses adresselPv4-2* et adresselPv6-2, et transmet au terminal T1 l'adresse adresselPv4-2* en réponse DNS. Le CPE met à jour sa liste des adresses en utilisation en y ajoutant l'adresse adresseIPV4-2*.
∘ Si l'adresse adresselPv4-2 n'est pas déjà utilisée, CPE1 maintient dans sa table la correspondance entre les adresses adresselPv4-2 et adresselPv6-2 et transmet au terminal T1 l'adresse adresselPv4-2. Le CPE met à jour sa liste des adresses en utilisation en y ajoutant l'adresse adresseIPV4-2. La seule conservation de l'adresse adresselPv6-2 peut éventuellement suffire ici, car cette adresse contient en elle-même l'adresseIPV4-2.

Lorsque le CPE1 reçoit un paquet IPv4 du terminal T1 avec en adresse destination DAv4 = adresselPv4-2 ou adresseIPv4-2*, et en adresse source SAv4 = adresselPv4-1, il met en oeuvre les opérations suivantes.
∘ Si DAv4 = adresseIPv4-2, il encapsule le paquet IPv4 dans un paquet IPv6 avec en adresse destination DAv6 = Pref2.1 | adresselPv4-2 et en adresse source SAv6 = Pref1.1 | adresselPv4-1, et route le paquet vers sa destination CPE2 en IPv6 natif.
∘ Si DAv4 = adresseIPv4-2*, il substitue d'abord l'adresse adresselPv4-2* par l'adresse adresselPv4-2 dans le paquet IPv4, encapsule ce dernier dans un paquet IPv6 avec en adresse destination DAv6 = Pref2.1 | adresselPv4-2 et en adresse source SAv6 = Pref1.1 | adresseIPv4-1, et route le paquet vers sa destination CPE2 en IPv6 natif.

Lorsque le CPE2 reçoit le paquet IPv6 avec en adresse destination DAv6 = Pref2.1 | adresselPv4-2 et en adresse source SAv6 = Pref1.1 | adresselPv4-1, il met en oeuvre les opérations suivantes.
∘ Si l'adresse IPv4-1 est déjà utilisée, CPE2 la substitue par une autre valeur adresselPv4-1*, maintient dans sa table la correspondance entre les adresses adresseIPv4-1* et adresselPv6-1, remplace l'adresse adresselPv4-1 par adresseÎPv4-1 * dans le paquet IPv4, et transmet ce dernier au terminal T2. Le CPE met à jour sa liste des adresses en utilisation en y ajoutant l'adresse adresselPV4-1*.
∘ Si l'adresse IPv4-1 n'est pas déjà utilisée, CPE2 maintient dans sa table la correspondance entre adresselPv4-1 et adresselPv6-1 et transmet le paquet IPv4 au terminal T2. Le CPE met à jour sa liste des adresses en utilisation en y ajoutant l'adresse adresseIPV4-1. La seule conservation de l'adresse l'adresseIPv6-1 peut éventuellement suffire ici, car elle contient en elle-même l'adresseIPV4-1.

On va décrire maintenant, en second lieu, les étapes d'une communication entre deux terminaux tels que les terminaux T1 et T3 de la figure 4.

Lorsqu'un terminal T1 d'adresse IPv4 privée adresselPv4-1 initie une communication avec un terminal T3 d'adresse publique adresseIPv4-3, il commence généralement par résoudre l'adresse du terminal T3. Cette résolution DNS est relayée par le CPE1 qui reçoit en réponse l'adresse IPv4 publique "adresselPv4-3" du terminal T3. Le CPE1 transmet alors au terminal T1 l'adresse adresselPv4-3 en réponse à sa requête DNS.

Le CPE1 ne disposant pas de préfixe correspondant à cette adresse IPv4 publique adresselPv4-3, il lui faudra donc découvrir le préfixe IPv6 du DS-INT qui connecte le réseau IPv6 avec le réseau IPv4 public concerné. Cette découverte peut se faire selon le procédé suivant.

Lorsque le CPE1 reçoit du terminal T1 un paquet IPv4 avec en adresse source SAv4 = adresselPv4-1 et en adresse de destination DAv4 = adresselPv4-3 pour laquelle il n'a pas de préfixe IPv6 correspondant, il encapsule ce paquet, à destination d'un routeur par défaut (le routeur d'accès par exemple), dans un paquet IPv6 avec en adresse destination DAv6 = adresselPv6 du routeur par défaut et en adresse source SAv6 = Pref1.1 | adresseIPv4-1.

Le routeur par défaut réceptionne le paquet IPv6, extrait le paquet IPv4, puis :
- détermine le préfixe IPv6 du DS-INT correspondant à l'adresse IPv4-3 (préfixe Prefc dans notre exemple),
- encapsule le paquet IPv4 dans un paquet IPv6 avec en adresse de destination DAv6 = Prefc | adresselPv4-3 et en adresse source SAv6 = Pref1.1 | adresseIPv4-1, et
- route ce paquet IPv6 vers son DS-INT de destination.

Plus précisément, pour déterminer le préfixe IPv6 du DS-INT correspondant à l'adresse publique IPv4-3, le routeur par défaut commence par chercher dans sa table de routage la route IPv6 qui a le plus long préfixe IPv4 correspondant à l'adresse de destination IPv4 publique. Une fois cette route trouvée, il extrait le préfixe IPv6 et construit l'adresse IPv6 de destination en concaténant le préfixe IPv6 trouvé avec l'adresse de destination IPv4 publique.

Lorsqu'un DS-INT reçoit un paquet IPv4 encapsulé dans un paquet IPv6 avec en adresse de destination DAv6 = Prefc | adresselPv4-3 (où adresselPv4-3 est une adresse IPv4 publique) et en adresse source SAv6 = Pref1.1 | adresselPv4-1 (où adresselPv4-1 est une adresse IPv4 privée), le DS-INT :
- extrait le paquet IPv4,
- traduit l'adresse privée source adresselPv4-1 en une adresse IPv4 publique adresseIPv4-1P,
- choisit un port libre portPub pour cette adresse publique,
- maintient dans sa table la correspondance entre les adresses adresseIPv4-1P, portPub, SAv6 et port privé, et
- route le paquet IPv4 vers sa destination.

Lorsqu'un DS-INT reçoit un paquet IPv4 avec en adresse de destination une adresse publique DAv4 = adresselPv4-2P, en port de destination portPub et en adresse source une adresse publique SAv4 = adresselPv4-3, le DS-INT :
- traduit l'adresse publique adresselPv4-2P et le port portPub en l'adresse privée correspondante adresselPv4-2 et le port portPub en le port privé correspondant,
- encapsule le paquet dans un paquet IPv6 avec en adresse destination DAv6 = Pref2.1 | adresselPv4-2 et en adresse source SAv6 = Prefc | adresselPv4-3, et
- route le paquet directement vers le CPE2.

Lorsque le CPE2 reçoit le paquet IPv6 avec en adresse de destination DAv6 = Pref2.1 | adresselPv4-2 et en adresse source SAv6 = Prefc | adresselPv4-3, le CPE2 :
- enregistre dans sa table, si ce n'est déjà fait, la correspondance entre l'adresse adresselPv4-3 et le préfixe Prefc (ou l'adresse SAv6),
- extrait le paquet IPv4, et
- route ce paquet vers son destinataire, à savoir le terminal T2 d'adresse adresseIPv4-2.

En principe, il ne doit pas y avoir de conflit d'adresses, car l'adresse IPv4-3 est une adresse publique. Mais en cas de besoin (suite, par exemple, à un choix d'adresse ne respectant pas une norme relative aux adresses IPv4 telle que la RFC 791), on peut faire appel à la fonction LAS décrite ci-dessus.

Ensuite, pour envoyer des paquets à destination de l'adresse IPv4-3, le CPE2 encapsulera directement vers le DS-INT concerné, car il connaîtra le préfixe Prefc.

Un exemple de table de correspondance associée à une passerelle est représenté sur la **figure 7a**. Dans cette table, la colonne de gauche contient des adresses IPv6 de correspondants distants, et la colonne de droite contient en regard les adresses IPv4 privées utilisées pour identifier ces correspondants au sein du domaine privé associé à la passerelle. La mention "NULL" dans la colonne de droite indique que l'adresse IPv4 correspondante (c'est-à-dire, la partie de droite de l'adresse IPv6 correspondante) n'a pas été substituée.

Un exemple de liste d'adresses IPv4 en cours d'utilisation, associée à une passerelle, est représenté sur la **figure 7b**, ou plus exactement dans la colonne de gauche de cette figure. On a indiqué dans la colonne de droite de cette figure si l'adresse correspondante est une adresse d'origine d'un correspondant distant, ou une adresse de substitution pour un correspondant distant, ou encore une adresse utilisée par un terminal appartenant au réseau privé associé à la passerelle.

Comme déjà mentionné, la présente invention concerne également un système informatique actionnant l'un quelconque des dispositifs de routage de paquets de données décrits ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour actionner l'un quelconque des dispositifs de routage de paquets de données décrits ci-dessus.

En effet, l'invention vise aussi un programme d'ordinateur téléchargeable depuis un réseau de communication comprenant des instructions pour la mise en oeuvre des moyens compris dans l'un quelconque des dispositifs de routage de paquets de données selon l'invention, lorsqu'il est exécuté sur un ordinateur. Ce programme d'ordinateur peut être stocké sur un support lisible par ordinateur et peut être exécutable par un microprocesseur.

Ce programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ("*USB flash drive*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans l'exécution du programme d'ordinateur.

## Revendications

1. Procédé de routage d'un paquet de données IPv4 émis par un terminal source (T1) appartenant à un premier domaine IPv4 privé à destination, via un domaine IPv6, d'un terminal destinataire (T2) appartenant à un second domaine IPv4, ledit second domaine IPv4 étant privé, ledit procédé comprenant, sur réception dudit paquet de données IPv4 de la part dudit terminal source (T1), les étapes suivantes :
- construction d'une adresse de destination IPv6,
- obtention d'un paquet de données IPv6 portant ladite adresse de destination IPv6, et
- routage dudit paquet de données IPv6 dans ledit domaine IPv6, ledit paquet de données IPv6 étant obtenu par encapsulation du paquet de données IPv4,
ledit procédé comprenant la construction de l'adresse de destination IPv6 s'effectuant par combinaison d'un préfixe IPv6 et de l'adresse IPv4 privée dudit terminal destinataire (T2) dans le second domaine IPv4, le routage s'effectuant sans application d'une fonction NAT/NAPT pour les paquets de données n'ayant à traverser que des réseaux de type IPv6, les paquets étant routés d'une passerelle (CPE1) du terminal source (T1) à une passerelle (CPE2) du terminal destinataire (T2) en IPv6 natif ; et
ladite passerelle (CPE1) du terminal source (T1) étant située entre ledit domaine IPv6 et ledit premier domaine IPv4, et étant apte à effectuer une substitution de l'adresse de destination du paquet de données IPv4 lorsqu'il y a un conflit d'adresse IPv4.

2. Procédé de routage d'un paquet de données IPv6 résultant de l'émission par un terminal source (T1) appartenant à un premier domaine IPv4, ledit premier domaine IPv4 étant privé, d'un paquet IPv4 à destination, via un domaine IPv6, d'un terminal destinataire (T2) appartenant à un second domaine IPv4 privé, le routage s'effectuant sans application d'une fonction NAT/NAPT pour les paquets de données n'ayant à traverser que des réseaux de type IPv6, les paquets étant routés d'une passerelle (CPE1) du terminal source (T1) à une passerelle (CPE2) du terminal destinataire (T2) en IPv6 natif, ledit procédé comprenant, sur réception d'un paquet de données IPv6, les étapes suivantes :
- obtention d'un paquet de données IPv4 à partir dudit paquet de données IPv6, et
- routage dans le second domaine IPv4 dudit paquet de données IPv4,
ledit paquet de données IPv4 est obtenu par extraction à partir dudit paquet de données IPv6, l'adresse source du paquet de données IPv6 étant construite par combinaison d'un préfixe IPv6 et de l'adresse IPv4 privée dudit terminal source (T1) dans le premier domaine IPv4 ; et
ladite passerelle (CPE2) du terminal destinataire (T2) étant située entre ledit domaine IPv6 et ledit second domaine IPv4, et étant apte à effectuer une substitution de l'adresse source du paquet de données IPv4 en cas de conflit d'adresse IPv4.

3. Dispositif de routage d'un paquet de données IPv4 émis par un terminal source (T1) appartenant à un premier domaine IPv4 privé à destination, via un domaine IPv6, d'un terminal destinataire (T2) appartenant à un second domaine IPv4, ledit second domaine IPv4 étant privé, ledit dispositif comprenant, sur réception dudit paquet de données IPv4 de la part dudit terminal source (T1), les moyens pour :
- construire une adresse de destination IPv6,
- obtenir un paquet de données IPv6 portant ladite adresse de destination IPv6, et
- router le ledit paquet de données IPv6 dans ledit domaine IPv6, ledit paquet de données IPv6 étant obtenu par encapsulation du paquet de données IPv4,
et lesdits moyens comprenant la construction de l'adresse de destination IPv6 par combinaison d'un préfixe IPv6 et de l'adresse IPv4 privée dudit terminal destinataire (T2) dans le second domaine IPv4, le routage sans application d'une fonction NAT/NAPT pour les paquets de données n'ayant à traverser que des réseaux de type IPv6, les paquets étant routés d'une passerelle (CPE1) du terminal source (T1) à une passerelle (CPE2) du terminal destinataire (T2) en IPv6 natif ; et
le dispositif de routage étant constitué par ladite passerelle (CPE1) du terminal source (T1) située entre ledit domaine IPv6 et ledit premier domaine IPv4, et étant apte à effectuer une substitution de l'adresse de destination du paquet de données IPv4 lorsqu'il y a un conflit d'adresse IPv4.

4. Dispositif de routage d'un paquet de données IPv6 résultant de l'émission par un terminal source (T1) appartenant à un premier domaine IPv4, ledit premier domaine IPv4 étant privé, d'un paquet IPv4 à destination, via un domaine IPv6, d'un terminal destinataire (T2) appartenant à un second domaine IPv4 privé, le routage s'effectuant sans application d'une fonction NAT/NAPT pour les paquets de données n'ayant à traverser que des réseaux de type IPv6, les paquets étant routés d'une passerelle (CPE1) du terminal source (T1) à une passerelle (CPE2) du terminal destinataire (T2) en IPv6 natif, ledit dispositif comprenant, sur réception d'un paquet de données IPv6, les moyens pour :
- obtenir un paquet de données IPv4 à partir dudit paquet de données IPv6, et
- router dans le second domaine IPv4 ledit paquet de données IPv4, et
ledit paquet de données IPv4 est obtenu par extraction à partir dudit paquet de données IPv6, l'adresse source du paquet de données IPv6 étant construite par combinaison d'un préfixe IPv6 et de l'adresse IPv4 privée dudit terminal source (T1) dans le premier domaine IPv4 ; et
le dispositif de routage étant constitué par ladite passerelle (CPE2) du terminal destinataire (T2) située entre ledit domaine IPv6 et ledit second domaine IPv4, et étant apte à effectuer une substitution de l'adresse source du paquet de données IPv4 en cas de conflit d'adresse IPv4.

5. Système de routage de paquets de données, comprenant
un dispositif de routage selon la revendication 3 relié à ur dispositif de routage selon la revendication 4 par l'entremise d'un routeur d'accès réseau (RAR) situé dans ledit domaine IPv6, et en ce que ledit routeur d'accès réseau (RAR) est apte à déterminer l'adresse IPv6 correspondant à une adresse IPv4 publique donnée.

6. Circuit électronique, comprenant un dispositif de routage de paquets de données selon l'une quelconque des revendications 3 ou 4.

7. Circuit électronique selon la revendication 6, constitué par une puce à logique câblée.

8. Moyen de stockage de données inamovible, ou partiellement ou totalement amovible, comportant des instructions de code de programme informatique qui, lorsqu'elles sont exécutées par un ordinateur, conduisent celui-ci à mettre en oeuvre le procédé suivant la revendication 1 ou 2.

9. Programme d'ordinateur téléchargeable depuis un réseau de communication et/ou stocké sur un support lisible par ordinateur et/ou exécutable par un microprocesseur, comprenant des instructions qui, lorsque le programme est exécuté par un ordinateur, conduisent celui-ci à mettre en oeuvre le procédé suivant la revendication 1 ou 2.

## Patentansprüche

1. Verfahren zum Routing eines IPv4-Datenpakets, das von einem Quell-Endgerät (T1), das zu einer ersten privaten IPv4-Domain gehört, über eine IPv6-Domain an ein Ziel-Endgerät (T2) ausgesendet wird, das zu einer zweiten IPv4-Domain gehört, wobei die zweite IPv4-Domain privat ist, wobei das Verfahren die folgenden Schritte bei Empfang des IPv4-Datenpakets vom Quell-Endgerät (T1) umfasst:
- Erstellen einer IPv6-Zieladresse,
- Erhalten eines IPv6-Datenpakets, das die IPv6-Zieladresse trägt, und
- Routen des IPv6-Datenpakets in der IPv6-Domain, wobei das IPv6-Datenpaket durch Kapselung des IPv4-Datenpakets erhalten wird,
wobei das Verfahren das Erstellen der IPv6-Zieladresse umfasst, das durch Kombination eines IPv6-Präfixes und der privaten IPv4-Adresse des Ziel-Endgeräts (T2) in der zweiten IPv4-Domain erfolgt, wobei das Routing für die Datenpakete, die nur Netzwerke vom Typ IPv6 durchlaufen müssen, ohne Anwendung einer NAT/NAPT-Funktion erfolgt, wobei die Pakete von einem Gateway (CPE1) des Quell-Endgeräts (T1) zu einem Gateway (CPE2) des Ziel-Endgeräts (T2) in nativem IPv6 geroutet werden; und
wobei sich der Gateway (CPE1) des Quell-Endgeräts (T1) zwischen der IPv6-Domain und der ersten IPv4-Domain befindet und geeignet ist, eine Substituierung der Zieladresse des IPv4-Datenpakets vorzunehmen, wenn ein IPv4-Adressenkonflikt vorliegt.

2. Verfahren zum Routing eines IPv6-Datenpakets, das aus der Aussendung, durch ein Quell-Endgerät (T1), das zu einer ersten IPv4-Domain gehört, wobei die erste IPv4-Domain privat ist, eines IPv4-Datenpakets über eine IPv6-Domain an ein Ziel-Endgerät (T2), das zu einer zweiten privaten IPv4-Domain gehört, resultiert, wobei das Routing für die Datenpakete, die nur Netzwerke vom Typ IPv6 durchlaufen müssen, ohne Anwendung einer NAT/NAPT-Funktion erfolgt, wobei die Pakete von einem Gateway (CPE1) des Quell-Endgeräts (T1) zu einem Gateway (CPE2) des Ziel-Endgeräts (T2) in nativem IPv6 geroutet werden, wobei das Verfahren die folgenden Schritte bei Empfang eines IPv6-Datenpakets umfasst:
- Erhalten eines IPv4-Datenpakets aus dem IPv6-Datenpaket, und
- Routen des IPv4-Datenpakets in der zweiten IPv4-Domain, wobei das IPv4-Datenpaket durch Extraktion aus dem IPv6-Datenpaket erhalten wird, wobei die Quelladresse des IPv6-Datenpakets durch Kombination eines IPv6-Präfixes und der privaten IPv4-Adresse des Quell-Endgeräts (T1) in der ersten IPv4-Domain erstellt wird; und
wobei sich der Gateway (CPE2) des Ziel-Endgeräts (T2) zwischen der IPv6-Domain und der zweiten IPv4-Domain befindet und geeignet ist, im Falle eines IPv4-Adressenkonflikts eine Substituierung der Quelladresse des IPv4-Datenpakets vorzunehmen.

3. Routing-Vorrichtung für ein IPv4-Datenpaket, das von einem Quell-Endgerät (T1), das zu einer ersten privaten IPv4-Domain gehört, über eine IPv6-Domain an ein Ziel-Endgerät (T2) ausgesendet wird, das zu einer zweiten IPv4-Domain gehört, wobei die zweite IPv4-Domain privat ist, wobei die Vorrichtung die Mittel für Folgendes bei Empfang des IPv4-Datenpakets vom Quell-Endgerät (T1) umfasst:
- Erstellen einer IPv6-Zieladresse,
- Erhalten eines IPv6-Datenpakets, das die IPv6-Zieladresse trägt, und
- Routen des IPv6-Datenpakets in der IPv6-Domain, wobei das IPv6-Datenpaket durch Kapselung des IPv4-Datenpakets erhalten wird,
und wobei die Mittel das Erstellen der IPv6-Zieladresse durch Kombination eines IPv6-Präfixes und der privaten IPv4-Adresse des Ziel-Endgeräts (T2) in der zweiten IPv4-Domain, das Routing ohne Anwendung einer NAT/NAPT-Funktion für die Datenpakete, die nur Netzwerke vom Typ IPv6 durchlaufen müssen, umfassen, wobei die Pakete von einem Gateway (CPE1) des Quell-Endgeräts (T1) zu einem Gateway (CPE2) des Ziel-Endgeräts (T2) in nativem IPv6 geroutet werden; und wobei die Routing-Vorrichtung vom Gateway (CPE1) des Quell-Endgeräts (T1) gebildet ist, der sich zwischen der IPv6-Domain und der ersten IPv4-Domain befindet und geeignet ist, eine Substituierung der Zieladresse des IPv4-Datenpakets vorzunehmen, wenn ein IPv4-Adressenkonflikt vorliegt.

4. Vorrichtung zum Routing eines IPv6Datenpakets, das aus der Aussendung, durch ein Quell-Endgerät (T1), das zu einer ersten IPv4-Domain gehört, wobei die erste IPv4-Domain privat ist, eines IPv4-Datenpakets über eine IPv6-Domain an ein Ziel-Endgerät (T2), das zu einer zweiten privaten IPv4-Domain gehört, resultiert, wobei das Routing für die Datenpakete, die nur Netzwerke vom Typ IPv6 durchlaufen müssen, ohne Anwendung einer NAT/NAPT-Funktion erfolgt, wobei die Pakete von einem Gateway (CPE1) des Quell-Endgeräts (T1) zu einem Gateway (CPE2) des Ziel-Endgeräts (T2) in nativem IPv6 geroutet werden, wobei die Vorrichtung die Mittel für Folgendes bei Empfang eines IPv6-Datenpakets umfasst:
- Erhalten eines IPv4-Datenpakets aus dem IPv6-Datenpaket, und
- Routen des IPv4-Datenpakets in der zweiten IPv4-Domain, und wobei das IPv4-Datenpaket durch Extraktion aus dem IPv6-Datenpaket erhalten wird, wobei die Quelladresse des IPv6-Datenpakets durch Kombination eines IPv6-Präfixes und der privaten IPv4-Adresse des Quell-Endgeräts (T1) in der ersten IPv4-Domain erstellt wird; und
wobei die Routing-Vorrichtung vom Gateway (CPE2) des Ziel-Endgeräts (T2) gebildet ist, der sich zwischen der IPv6-Domain und der zweiten IPv4-Domain befindet und geeignet ist, im Falle eines IPv4-Adressenkonflikts eine Substituierung der Quelladresse des IPv4-Datenpakets vorzunehmen.

5. System zum Routing von Datenpaketen, umfassend eine Routing-Vorrichtung nach Anspruch 3, die mit einer Routing-Vorrichtung nach Anspruch 4 durch die Vermittlung eines Netzwerkzugangsrouters (RAR) verbunden ist, der sich in der IPv6-Domain befindet, und dadurch, dass der Netzwerkzugangsrouter (RAR) geeignet ist, die IPv6-Adresse zu bestimmen, die einer gegebenen öffentlichen IPv4-Adresse entspricht.

6. Elektronischer Schaltkreis umfassend eine Routing-Vorrichtung für Datenpakete nach einem der Ansprüche 3 oder 4.

7. Elektronischer Schaltkreis nach Anspruch 6, der von einem Chip mit verdrahteter Logik gebildet ist.

8. Nicht entfernbares oder teilweise oder vollständig entfernbares Datenspeichermittel mit Computerprogrammcode-Anweisungen, die, wenn sie von einem Computer ausgeführt werden, diesen dazu veranlassen, das Verfahren nach Anspruch 1 oder 2 durchzuführen.

9. Computerprogramm, das aus einem Kommunikationsnetz heruntergeladen werden kann und/oder auf einem computerlesbaren Datenträger gespeichert ist und/oder von einem Mikroprozessor ausgeführt werden kann, das Anweisungen umfasst, die bei Ausführung des Programms durch einen Computer diesen dazu veranlassen, das Verfahren nach Anspruch 1 oder 2 durchzuführen.

## Claims

1. A method of routing an IPv4 data packet sent by a source terminal (T1) belonging to a first private IPv4 domain, via an IPv6 domain, to a destination terminal (T2) belonging to a second IPv4 domain, said second IPv4 domain being private, said method comprising, on reception of said IPv4 data packet from said source terminal (T1):
constructing an IPv6 destination address;
obtaining an IPv6 data packet carrying said IPv6 destination address, and
routing said IPv6 data packet in said IPv6 domain, said IPv6 data packet being obtained by encapsulating the IPv4 data packet, said method comprising the construction of the IPv6 destination address by combining an IPv6 prefix and the private IPv4 address of said destination terminal (T2) in the second IPv4 domain, the routing being performed without application of a NAT/NAPT function for the data packets transiting only through IPv6 type networks, the packets being routed from a gateway (CPE1) of the source terminal (T1) to a gateway (CPE2) of the destination terminal (T2) in native IPv6; and
said gateway (CPE1) of the source terminal (T1) being located between said IPv6 domain and said first IPv4 domain, and being able to make a substitution of the destination address of the IPv4 data packet in case of an IPv4 address conflict.

2. A method of routing an IPv6 data packet resulting from the sending by a source terminal (T1) belonging to a first IPv4 domain, which first IPv4 domain is private, of an IPv4 packet, via an IPv6 domain, to a destination terminal (T2) belonging to a second private IPv4 domain, the routing being performed without application of a NAT/NAPT function for the data packets transiting only through IPv6 type networks, the packets being routed from a gateway (CPE1) of the source terminal (T1) to a gateway (CPE2) of the destination terminal (T2) in native IPv6, said method comprising, on reception of an IPv6 data packet:
obtaining an IPv4 data packet from said IPv6 data packet, and
routing in the second IPv4 domain of the said IPv4 data packet,
said IPv4 data packet is obtained by extraction from said IPv6 data packet, the source address of the IPv6 data packet being constructed by combining an IPv6 prefix and the private IPv4 address of said source terminal (T1) in the first IPv4 domain; and said gateway (CPE2) of the destination terminal (T2) being located between said IPv6 domain and said second IPv4 domain, and being able to make a substitution of the source address of the IPv4 data pocket in case of an IPv4 address conflict.

3. A routing device an IPv4 data packet sent by a source terminal (T1) belonging to a first private IPv4 domain, via an IPv6 domain, to a destination terminal (T2) belonging to a second IPv4 domain, said second IPv4 domain being private, said device comprising, on reception of said IPv4 data packet from said source terminal (T1), means for:
constructing an IPv6 destination address;
obtaining an IPv6 data packet carrying said IPv6 destination address; and
routing said IPv6 data packet in said IPv6 domain, said IPv6 data packet being obtained by encapsulating the IPv4 data packet; and said means comprising the construction of the IPv6 destination address by combining an IPv6 prefix and the private Ipv4 address of said destination terminal (T2) in the second IPv4 domain, the routing without application of a NAT/NAPT function for the data packets transiting only through IPv6 type networks, the packets being routed from a gateway (CPE1) of the source terminal (T1) to a gateway (CPE2) of the destination terminal (T2) in native IPv6; and
the routing device being constituted by said gateway (CPE1) of the source terminal (T1) located between said IPv6 domain and said first IPv4 domain, and being able to make a substitution of the destination address of the IPv4 data packet in case of an IPv4 address conflict.

4. A device for routing an IPv6 data packet resulting from the sending by a source terminal (T1) belonging to a second IPv4 domain, which first IPv4 domain is private, of an IPv4 packet, via an IPv6 domain, to a destination terminal (T2) belonging to a second private IPv4 domain, the routing being performed without application of a NAT/NAPT function for the data packets transiting only through IPv6 type networks, the packets being routed from a gateway (CPE1) of the source terminal (T1) to a gateway (CPE2) of the destination terminal (T2) in native IPv6, said device comprising, on reception of an IPv6 data packet, means for:
obtaining an IPv4 data packet from said IPv6 data packet, and
routing in the second IPv4 domain of the said IPv4 data packet,
said IPv4 data packet is obtained by extraction from said IPv6 data packet, the source address of the IPv6 data packet being constructed by combining an IPv6 prefix and the private IPv4 address of said source terminal (T1) in the first IPv4 domain; and the routing device being constituted by said gateway (CPE2) of the destination terminal (T2) being located between said IPv6 domain and said second IPv4 domain, and being able to make a substitution of the source address of the IPv4 data packet in case of an IPv4 address conflict.

5. A data packets routing system, comprising a routing device according to claim 3 connected to a routing device according to claim 4 through a network access router (RAR) located in said IPv6 domain, and said network access router (RAR) is able to determine the IPv6 address corresponding to a given public IPv4 address.

6. An electronic circuit, comprising a data packets routing device according to any one of claims 3 or 4.

7. An electronic circuit according to claim 6, constituted by a wired logic chip.

8. Data storage means that are not removable, partially removable, or completely removable, comprising computer program code instructions which, when executed by a computer, cause it to implement the method according to claim 1 or 2.

9. Computer program downloadable from a communication network and/or stored on a computer readable medium and/or executable by a microprocessor, comprising instructions which, when the program is executed by a computer, cause it to implement the method according to claim 1 or 2.
